Europäisches Patentamt

European Patent Office

Office européen des brevets

(11) Veröffentlichungsnummer: **0 475 524 A1**

# (12) EUROPÄISCHE PATENTANMELDUNG

(21) Anmeldenummer: **91202282.9**

(22) Anmeldetag: **06.09.91**

(51) Int. Cl.5: **G11B 15/675**

(30) Priorität: **11.09.90 AT 1850/90**

(43) Veröffentlichungstag der Anmeldung:
**18.03.92 Patentblatt 92/12**

(84) Benannte Vertragsstaaten:
**DE FR GB**

(71) Anmelder: **N.V. Philips' Gloeilampenfabrieken**
**Groenewoudseweg 1**
**NL-5621 BA Eindhoven(NL)**

(72) Erfinder: **Inschlag, Josef**
**c/o INT. OCTROOIBUREAU B.V., Prof.**
**Holstlaan 6**
**NL-5656 AA Eindhoven(NL)**
Erfinder: **Metzker, Leopold**
**c/o INT. OCTROOIBUREAU B.V., Prof.**
**Holstlaan 6**
**NL-5656 AA Eindhoven(NL)**

(74) Vertreter: **Van Weele, Paul Johannes Frits et**
**al**
**INTERNATIONAAL OCTROOIBUREAU B.V.**
**Prof. Holstlaan 6**
**NL-5656 AA Eindhoven(NL)**

(54) **Aufzeichnungs- und/oder Wiedergabegerät.**

(57) Bei einem Aufzeichnungs- und/oder Wiedergabegerät (1) mit einem von einem Motor (19) über ein
mehrstufiges Getriebe (20) verstellbaren Kassettenhalter (10), der zwischen einer Ladeposition und
einer Betriebsposition verstellbar ist, ist mit einem
Getriebeteil (27) des Getriebes (20) ein Impulsgeber
(41) gekoppelt, der beim händischen Einführen einer
Kassette (5) in den Kassettenhalter (10), wobei dieser händisch aus seiner Ladeposition in eine Schaltposition verstellt wird, über das Getriebe (20) angetrieben wird und dabei Impulse erzeugt, die mittels
eines Zählers (46) gezählt werden, wobei der Zählerstand (Z1) des Zählers (46) in einem Komparator
(47) mit einem Sollwert (N1) verglichen wird und der
Komparator (47) bei Übereinstimmung des Zählwertes (Z1) mit dem Sollwert (N1), was bei Erreichen
der Schaltposition der Fall ist, ein Steuersignal (U1)
für den Motor (19) erzeugt, wonach von dem Motor
(19) über das Getriebe (20) der Kassettenhalter (10)
motorisch von seiner Schaltposition in seine Betriebsposition verstellt wird.

FIG.3

Rank Xerox (UK) Business Services

Die Erfindung bezieht sich auf ein Aufzeichnungs- und/oder Wiedergabegerät, in das eine einen Aufzeichnungsträger enthaltende Kassette einsetzbar ist, mit einem Motor, mit einem von dem Motor antreibbaren Getriebe, mit einem Kassettenhalter, der von dem Motor über das Getriebe antreibbar ist und der zwischen einer Ladeposition, in der die Kassette händisch in den Kassettenhalter einführbar ist, und einer Betriebsposition, in der die in den Kassettenhalter eingeführte Kassette eine Betriebslage im Gerät einnimmt, verstellbar gehalten ist und der mindestens einen Begrenzungsanschlag aufweist, gegen den die Kassette beim händischen Einführen in den Kassettenhalter stößt und über den beim händischen Einführen der Kassette der Kassettenhalter händisch von seiner Ladeposition in eine Schaltposition verstellbar ist, und mit einer von dem Kassettenhalter her ansteuerbaren Sensoreinrichtung, die bei Erreichen der Schaltposition des Kassettenhalters nach dessen händischer Verstellung aus seiner Ladeposition ein Steuersignal zum Einschalten des Motors erzeugt, wobei der Motor aufgrund des Steuersignales über das Getriebe den Kassettenhalter motorisch von seiner Schaltposition in seine Betriebsposition verstellt.

Ein solches dem einleitenden Absatz entsprechendes Gerät ist bekannt und im Handel erhältlich. Bei diesem bekannten Gerät ist zum Einführen einer Kassette in den hiebei schachtförmig ausgebildeten Kassettenhalter die Kassette in einer in der Schachtrichtung verlaufenden Einschubrichtung in den Kassettenhalter einschiebbar. Der Kassettenhalter ist formschlüssig gekoppelt mit einem ersten Schieber des Getriebes, der parallel zur Einschubrichtung der Kassette verstellbar geführt ist. Der erste Schieber ist entgegen der Einschubrichtung von einer an ihm angreifenden Zugfeder belastet, die andererseits an einem zum ersten Schieber parallel geführten zweiten Schieber des Getriebes angreift. Der zweite Schieber steht über einen mehrstufigen Getriebeabschnitt des Getriebes mit dem Motor in Antriebsverbindung. Die beiden mit der Zugfeder zueinander verspannten Schieber weisen je einen Anschlag auf, und die Zugfeder trachtet danach, die beiden Anschläge in gegenseitiger Anlage zu halten. Beim händischen Einführen einer Kassette in den in seiner Ladeposition befindlichen Kassettenhalter stößt dieselbe gegen den Begrenzungsanschlag des Kassettenhalters und nimmt diesen mit, wodurch der Kassettenhalter händisch aus seiner Ladeposition in Richtung zu seiner Schaltposition verstellt wird. Dabei wird von dem Kassettenhalter der mit ihm formschlüssig gekoppelte erste Schieber mitgenommen. Der zweite Schieber kann dabei jedoch aufgrund des stillstehenden Motors und der Blockierwirkung des zwischen dem zweiten Schieber und dem Motor liegenden Getriebeabschnittes nicht mitverschoben werden. Hiedurch wird die zwischen den beiden Schiebern wirksame Zugfeder gespannt, wobei die beiden Anschläge der Schieber voneinander abheben. Dieses Spannen der Zugfeder erfolgt so lange, bis der Kassettenhalter seine Schaltposition erreicht hat. In dieser Schaltposition steht somit der Kassettenhalter über den ersten Schieber unter der Kraftwirkung der Zugfeder, die dabei danach trachtet, den Kassettenhalter in seine Ladeposition zurückzuverstellen. In der Schaltposition betätigt der entgegen der Kraft der Zugfeder verschobene erste Schieber einen elektrischen Schalter, der als von dem Kassettenhalter her ansteuerbare Sensoreinrichtung vorgesehen ist und durch dessen Betätigung ein Steuersignal zum Einschalten des Motors erzeugt wird. Durch den aufgrund des Steuersignales dann eingeschalteten Motor wird das Getriebe in Gang gesetzt, um den Kassettenhalter motorisch von seiner Schaltposition in seine Betriebsposition zu verstellen. Dabei wird zuerst der zweite Schieber dem zuvor beim händischen Einschieben einer Kassette von dem Kassettenhalter verschobenen ersten Schieber nachgeführt, wodurch die Kraftwirkung der Zugfeder auf den ersten Schieber entgegen der Einschubrichtung innerhalb einer bestimmten Zeitspanne abgebaut wird. Wenn aber aus Versehen während dieser Zeitspanne, während der die Kraftwirkung der Zugfeder auf den ersten Schieber abgebaut wird, die händisch eingeschobene Kassette vom Benützer des Gerätes losgelassen wird, dann wird durch die noch nicht gänzlich abgebaute, noch bestehende Kraftwirkung der Zugfeder auf den ersten Schieber der mit dem ersten Schieber formschlüssig gekoppelte Kassettenhalter ruckartig in Richtung zu seiner Ladeposition entgegen der Einschubrichtung verstellt, wobei die Kassette von dem Begrenzungsanschlag des Kassettenhalters abhebt und daher nicht mehr ordnungsgemäß und einwandfrei in dem Kassettenhalter positioniert ist. Hiedurch kann es beim weiteren motorischen Verstellen des Kassettenhalters in Richtung zu seiner Betriebsposition zu einem Verklemmen beziehungsweise Blockieren der Kassette an anderen Geräteteilen kommen, was zur Folge hat, daß der Kassettenhalter nicht ordnungsgemäß in seine Betriebsposition verstellt werden kann. Eine solche Fehlbedienung kann eine Beschädigung des Gerätes beziehungsweise von Geräteteilen zur Folge haben, was selbstverständlich unerwünscht ist.

Wie aus vorstehendem hervorgeht, ist bei dem bekannten Gerät die Sensoreinrichtung durch einen elektrischen Schalter gebildet. Ein solcher Schalter muß bei seiner Montage im Gerät sehr genau positioniert werden oder nach seiner Montage genau in seiner Lage justiert werden, um die Schaltposition des Kassettenhalters exakt festzulegen. Dies stellt einen zu sätzlichen erheblichen Aufwand dar, was die Herstellung eines solchen Gerätes verteuert. Die exakte Festlegung der Schaltposition des Kassettenhalters ist deshalb erforderlich, weil diese Schaltposition einerseits nicht zu nahe bei der Ladeposition liegen soll, da sonst bei bereits in der Schaltposition befindlichem Kassettenhalter die Kassette noch von Hand aus festgehalten werden könnte, was nach dem in der Schaltposition ausgelösten Einschalten des Motors beim motorischen Antreiben des Kassettenhalters in Richtung zu seiner Betriebsposition eine Betriebsstörung zur Folge hätte, und weil diese Schaltposition andererseits nicht zu weit von der Ladeposition liegen soll, da sonst der die Kassette händisch einschiebende Benützer bei Erreichen der Schaltposition mit seinen Fingern zu tief in das Gerät eingedrungen ist, was nach dem in der Schaltposition ausgelösten Einschalten des Motors beim motorischen Antreiben des Kassettenhalters in Richtung zu seiner Betriebsposition zu einer Verletzung der Finger des Benützers führen kann. Wie aus vorstehendem weiters hervorgeht, ist bei dem bekannten Gerät zum Auslösen bzw. Ansteuern des die Sensoreinrichtung bildenden elektrischen Schalters eine relativ aufwendige Konstruktion mit zwei zueinander federverspannten Schiebern erforderlich, was hinsichtlich eines einfachen Aufbaues, geringer Kosten und hoher Betriebssicherheit ungünstig ist.

An dieser Stelle sei erwähnt, daß aus der DE-OS 38 38 013 ebenfalls ein dem einleitenden Absatz entsprechendes Gerät bekannt ist. Bei diesem Gerät ist in dem Getriebe zwischen dem Motor und dem Kassettenhalter ein Schneckengetriebe enthalten, das vom Kassettenhalter her gesehen selbsthemmend ist, so daß, nachdem eine Kassette beim händischen Einführen derselben gegen den Begrenzungsanschlag des Kassettenhalters gestoßen ist, der Kassettenhalter nur ganz geringfügig aus seiner Ladeposition verstellbar ist, so daß nachteiligerweise die Schaltposition des Kassettenhalters sehr nahe bei der Ladeposition liegt, was hinsichtlich eines störunanfälligen Betriebes unerwünscht ist. Weiters ist auch bei diesem bekannten Gerät als Sensoreinrichtung ein von einem Getriebeteil, der von dem Kassettenhalter her verstellbar ist, betätigbarer elektrischer Schalter vorgesehen, was die bereits vorstehend erläuterten Probleme hinsichtlich genauer Positionierung des Schalters mit sich bringt. Da der mit dem Schalter zusammenwirkende Getriebeteil aufgrund der Selbsthemmung des Schneckengetriebes nur ganz geringfügig von dem Kassettenhalter her verstellbar ist, ist es auch relativ schwierig einen exakten Schaltzeitpunkt zu gewährleisten.

Die Erfindung hat sich zur Aufgabe gestellt, die vorstehend angeführten Schwierigkeiten zu vermeiden und bei einem Gerät der im einleitenden Absatz angeführten Gattung auf einfache Weise eine in einem ausreichend großen, wählbaren Abstand von der Ladeposition liegende und sehr genau festgelegte Schaltposition für den Kassettenhalter zu gewährleisten und mit einfachen Mitteln das Sternersignal zum Einschalten des Motors bei Erreichen der Schaltposition durch den Kassettenhalter nach dessen händischer Verstellung aus seiner Ladeposition zu erzeugen. Hiefür ist die Erfindung dadurch gekennzeichnet, daß die Sensoreinrichtung einen Impulsgeber aufweist, der einen von einem Getriebeteil des Getriebes antreibbaren Impulsauslöser aufweist und der zur Erzeugung einer Vielzahl von Impulsen entsprechend der Bewegung des Getriebeteiles ausgebildet ist, daß von dem Getriebe zumindest der zwischen dem Kassettenhalter und dem Getriebeteil liegende Getriebeabschnitt zumindest in Richtung vom Kassettenhalter zum Getriebeteil formschlüssig ausgebildet ist, daß beim händischen Verstellen des Kassettenhalters von seiner Ladeposition in seine Schaltposition vom Kassettenhalter über den Getriebeabschnitt der Getriebeteil und von diesem der Impulsauslöser angetrieben wird und dabei der Impulsgeber Impulse erzeugt, und daß die Sensoreinrichtung einen Zähler, der die Anzahl der mit dem Impulsgeber erzeugten Impulse zählt, und einen mit dem Zähler zusammenwirkenden Komparator aufweist, der die Anzahl der mit dem Impulsgeber erzeugten und mit dem Zähler gezählten Impulse gemäß einer vorgegebenen Vergleichsbedingung mit einem Sollwert vergleicht und bei Erfüllung der Vergleichsbedingung das Steuersignal zum Einschalten des Motors erzeugt. Auf diese Weise ist erreicht, daß die Erzeugung des Steuersignales zum Einschulten des Motors mit besonders einfachen Mitteln erfolgt, indem ein ohnehin vorhandener Getriebeteil einen Impulsauslöser eines zur Abgabe einer Vielzahl von Impulsen ausgebildeten Impulsgebers antreibt. Ein solcher Impulsauslöser kann als separater Teil ausgebildet sein, der mit dem Getriebeteil mechanisch verbunden ist. Ein Impulsauslöser kann aber auch mit dem Getriebeteil einstückig verbunden oder durch den Getriebeteil selbst gebildet sein. Beispielsweise kann mit einem rotierend antreibbaren Getriebeteil als Impulsauslöser ein Flügelrad verbunden sein, das mit einer photoelektrischen Lichtschranke des Impulsgebers zusammenwirkt. Es kann auch der Zahnkranz eines als Getriebeteil vorgesehenen Zahnrades als Impulsauslöser ausgenützt werden, wobei Zähne des Zahnkranzes beispielsweise optisch abtastbar sind. Ein in seiner Längsrichtung verstellbar geführter Schieber als Getriebeteil kann als Impulsauslöser ein Feld mit aufeinanderfolgend abwechselnd angeordneten hellen und dunklen Markierungen aufweisen, die optisch abtastbar sind. Weiters ist durch die erfindungsgemäßen Maßnahmen erreicht, daß ohne eine zusätzliche genaue Positionierung bzw.

Justierung für den Impulsauslöser und den Impulsgeber die Schaltposition des Kassettenhalters besonders exakt festgelegt ist, da die Schaltposition nur durch die Anzahl der von dem Impulsauslöser ausgelösten und mit dem Impulsgeber erzeugten Impulse bestimmt wird, dies unabhängig von einer genauen Position des Impulsauslösers und des Impulsgebers. Durch die Wahl des Sollwertes kann auf einfache Weise der Abstand der Schaltposition von der Ladeposition festgelegt werden. Hiedurch ist es auf sehr einfache Weise durch Änderung des Sollwertes möglich, den Abstand zwischen Ladeposition und Schaltposition und damit die Schaltposition selbst zu verändern, ohne daß bauliche Veränderungen im Gerät vorgenommen werden müssen. Weiters ist hiedurch vorteilhafterweise erreicht, daß ohne einer dem händischen Einführen einer Kassette und dem dabei erfolgenden händischen Verstellen des Kassettenhalters entgegenwirkenden Feder das Auslangen gefunden werden kann. Wenn aber keine solche Feder vorgesehen ist, tritt beim händischen Einführen einer Kassette in den Kassettenhalter und dem dabei erfolgenden händischen Verstellen des Kassettenhalters von seiner Ladeposition in seine Schaltposition nie eine entgegen dem händischen Einführen der Kassette und entgegen dem dabei erfolgenden händischen Verstellen des Kassettenhalters wirksame Federbelastung auf, so daß durch eine derartige Federbelastung mögliche Fehlfunktionen ausgeschlossen sind.

Wenn bei einem erfindungsgemäßen Gerät beim händischen Einführen einer Kassette in den Kassettenhalter der Benützer des Gerätes den Einführvorgang in einer zwischen der Ladeposition und der Schaltposition liegenden Zwischenposition abbricht, bevor der Kassettenhalter seine Schaltposition erreicht hat und der Komparator das Steuersignal zum Einschalten des Motors erzeugt hat, und anschließend die Kassette wieder aus dem Kassettenhalter herausnimmt, dann soll trotzdem der Kassettenhalter nach dem Herausnehmen der Kassette in einer bestimmten Position gehalten werden. Hiezu könnte beispielsweise der Kassettenhalter mit Hilfe einer separaten Federeinrichtung, die mit dem Kassettenhalter zusammenwirkt, in seine Ladeposition zurückverstellt werden. Um ohne eine solche separate Federeinrichtung auszukommen und trotzdem zu gewährleisten, daß der Kassettenhalter einwandfrei in einer bestimmten Position gehalten wird, hat sich als vorteilhaft erwiesen, wenn das Getriebe zum Festhalten des Kassettenhalters in einer jeweils zum Zeitpunkt eines Wegfalles der beim händischen Einführen auf die Kassette ausgeübten Verstellkraft eingenommenen Zwischenposition zwischen der Ladeposition und der Schaltposition ausgebildet ist. Hiedurch ist auf einfache Weise erreicht, daß nach einem Herausnehmen einer Kassette aus dem Kassettenhalter, bevor der Kassettenhalter seine Schaltposition erreicht hat, der Kassettenhalter mittels des hiefür geeignet ausgebildeten Getriebes in einer zwischen der Ladeposition und der Schaltposition liegenden Zwischenposition sicher gehalten wird.

In diesem Zusammenhang hat sich als vorteilhaft erwiesen, wenn die Sensoreinrichtung einen Speicher aufweist, mit dem die bis zum Erreichen der Zwischenposition mit dem Inpulsgeber erzeugte und mit dem Zähler gezählte Anzahl von Impulsen gespeichert wird. Hiedurch ist erreicht, daß die Anzahl der bis zum Erreichen der Zwischenposition mit dem Impulsgeber erzeugten und mit dem Zähler gezählten Impulse mit dem Speicher gespeichert wird und daher für beliebig lange Zeit erhalten bleibt und zur Verfügung steht. Wenn dann neuerlich eine Kassette in den hiebei mittels des Getriebes in seiner Zwischenposition gehaltenen Kassettenhalter eingeschoben wird und der Kassettenhalter dabei dann über seinen Begrenzungsanschlag aus seiner Zwischenposition in Richtung zu seiner Ladeposition verstellt wird, dann wird der Zählvorgang bei dem der Zwischenposition entsprechenden, mit dem Speicher gespeicherten Wert fortgesetzt, wodurch gewährleistet ist, daß, obwohl der Kassettenhalter nicht unmittelbar aus seiner Ladeposition, sondern aus seiner Zwischenposition in seine Schaltposition verstellt wird, exakt bei Erreichen der Schaltposition das Steuersignal zum Einschalten des Motors zum motorischen Verstellen des Kassettenhalters in seine Betriebsposition erzeugt wird. Die Speicherung der bis zum Erreichen der Zwischenposition mit dem Impulsgeber erzeugten und mit dem Zähler gezählten Anzahl von Impulsen kann in einem separaten Speicher, aber auch in dem zugleich als Speicher ausgenützten Zähler selbst erfolgen.

Nach einem wie vorstehend erwähnten Abbruch des Einführvorganges einer Kassette in den Kassettenhalter kann der Kassettenhalter mittels des Getriebes an sich für beliebig lange Zeit in der jeweiligen Zwischenposition gehalten werden. Als vorteilhaft hat sich erwiesen, wenn die Sensoreinrichtung einen Detektor aufweist, mit dem detektierbar ist, daß die Vergleichsbedingung für die Anzahl der mit dem Impulsgeber erzeugten und mit dem Zähler gezählten Impulse mit dem Sollwert innerhalb einer vorgegebenen Zeitspanne nach dem Auftreten des ersten erzeugten Impulses erfüllt ist, und der bei Nichterfüllung der Vergleichsbedingung innerhalb dieser Zeitspanne ein weiteres Steuersignal zum Einschalten des Motors erzeugt, wobei der Motor aufgrund des weiteren Steuersignales über das Getriebe den Kassettenhalter motorisch von seiner Zwischenposition in seine Ladeposition zurückverstellt. Hiedurch ist auf besonders einfache Weise erreicht, daß nach einem Abbruch des Einführvorganges einer Kassette in den Kassettenhalter nach Ablauf einer wählbaren Zeitspanne der Kassettenhalter automatisch aus seiner jeweils eingenommenen Zwischenposition in seine Ladeposition zurückverstellt wird.

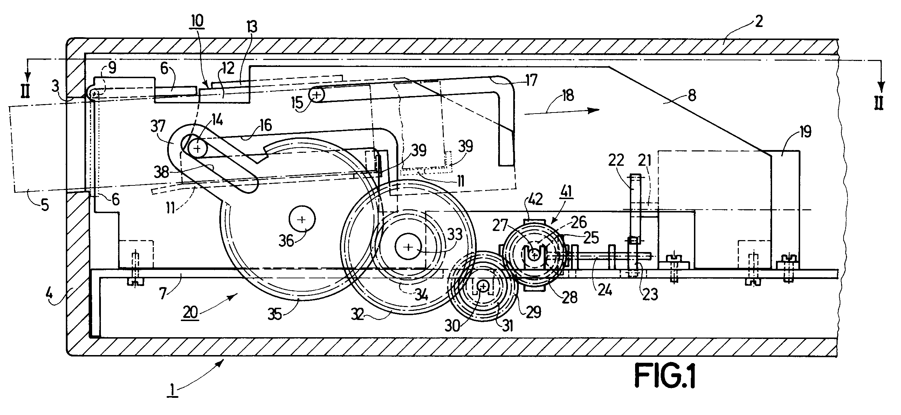

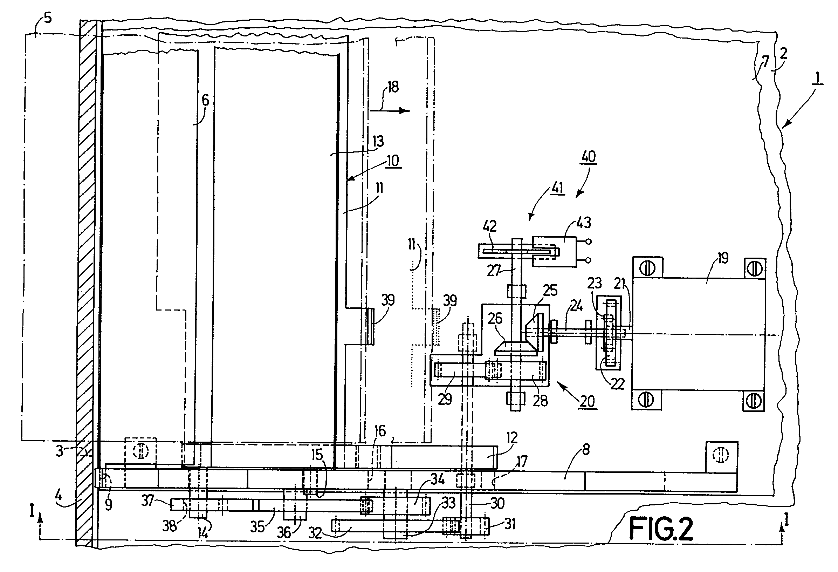

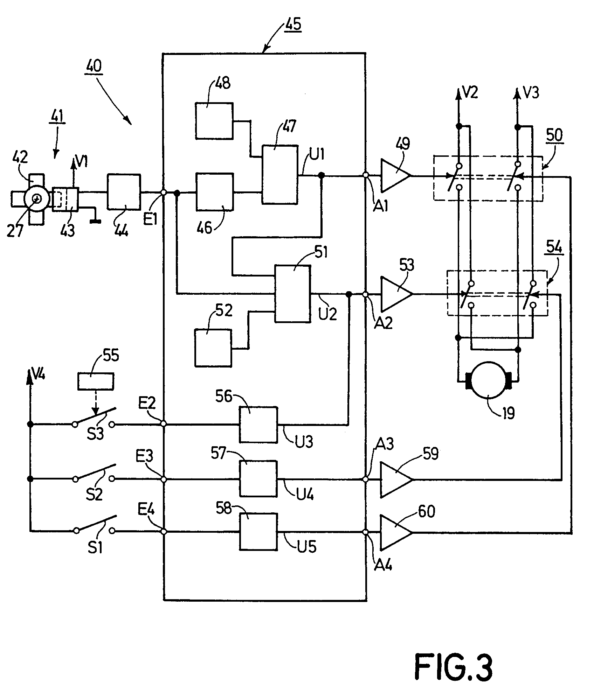

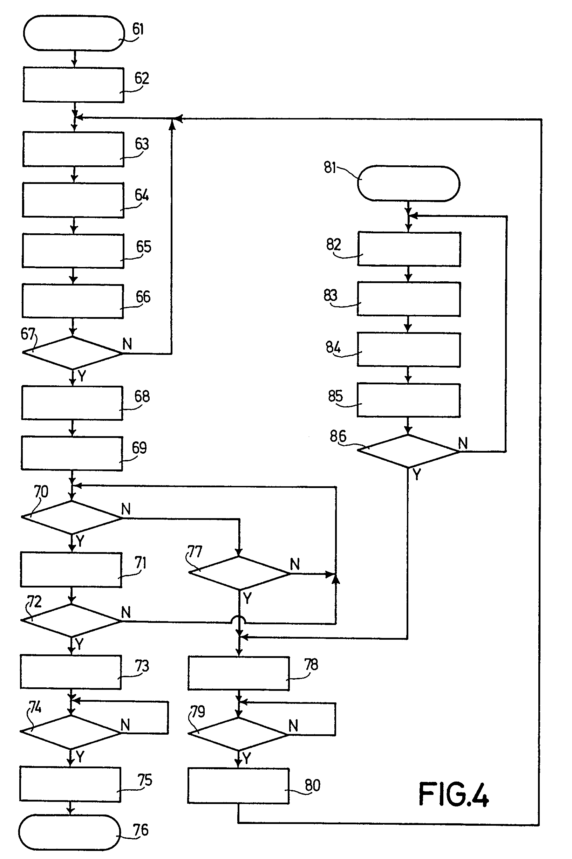

Die Erfindung wird im folgenden anhand eines in den Zeichnungen dargestellten Ausführungsbeispieles, auf das die Erfindung jedoch nicht beschränkt sein soll, näher beschrieben. Die Figur 1 zeigt schematisch in einem Querschnitt etwa in natürlicher Größe einen im Zusammenhang mit der vorliegenden Erfindung wesentlichen Teil eines Aufzeichnungs- und Wiedergabegerätes, das einen zur Aufnahme einer Magnetbandkassette ausgebildeten Kassettenhalter aufweist. Die Figur 2 zeigt in einem Schnitt längs der Linie II-II in Figur 1, also in einer Draufsicht bei weggeschnittener Gehäusedeckenwand, den erfindungswesentlichen Teil des Gerätes gemäß Figur 1. Die Figur 3 zeigt schematisch einen im Zusammenhang mit der vorliegenden Erfindung wesentlichen Teil der Schaltung des Gerätes gemäß den Figuren 1 und 2, welcher Schaltungsteil einen Mikrocomputer enthält. Die Figur 4 zeigt ein Flußdiagramm eines Programmablaufes, der in dem Mikrocomputer des Schaltungsteiles gemäß Figur 3 abgearbeitet wird.

Die Figuren 1 und 2 zeigen einen Teil eines als Videorecorder ausgebildeten Aufzeichnungs- und Wiedergabegerätes, dessen Gehäuse 2 in den Schnittdarstellungen gemäß den Figuren 1 und 2 teilweise weggeschnitten ist. In das Gerät 1 ist durch eine Öffnung 3 in der Vorderwand 4 des Gehäuses 2 hindurch eine Kassette 5 einsetzbar. Die Kassette 5 ist in den Figuren 1 und 2 nur schematisch mit einer strichpunktierten Linie dargestellt. Die Kassette 5 enthält in bekannter Weise ein Magnetband als Aufzeichnungsträger, das hiebei zwischen zwei nebeneinanderliegenden Spulen verläuft` Die Öffnung 3 ist mittels eines verschwenkbaren Deckels 6 verschließbar, der in Figur 1 in seiner Schließstellung mit punktierten Linien und in seiner geöffneten Stellung mit vollen Linien dargestellt ist. Der Verstellmechanismus für den Deckel 6 ist nicht dargestellt.

Das Gerät 1 weist ein im wesentlichen plattenförmiges Chassis 7 auf, das mit dem Gehäuse 2 auf nicht näher dargestellte Weise verbunden ist. Mit dem Chassis 7 sind zwei senkrecht zum Chassis 7 verlaufende Führungs- bzw. Montage-Wände 8 mittels Schraubverbindungen verbunden. Von den beiden Wänden 8 ist sowohl in Figur 1 als auch in Figur 2 nur eine Wand sichtbar. Zwischen den beiden Wänden 8 ist der Deckel 6 mit Hilfe von zwei Achsstummeln 9, die von ihm seitlich abstehen, verschwenkbar gelagert.

Zur Aufnahme einer in das Gerät 1 eingeführten Kassette 5 weist das Gerät 1 einen schachtförmigen Kassettenhalter 10 auf. Der Kassettenhalter 10 besteht aus einer metallenen Bodenplatte 11, zwei Seitenwänden 12 aus Kunststoff und einer metallenen Deckenplatte 13. Die Seitenwände 12 sind mit der metallenen Bodenplatte 11 und der metallenen Deckenplatte 13 durch Ultraschall-Schweißverbindungen verbunden. Von den beiden Seitenwänden 12 stehen jeweils nach außen zwei mit den Seitenwänden 12 einstückig ausgebildete, aus Kunststoff bestehende Führungsstifte 14 und 15 seitlich ab. Die Führungsstifte 14 und 15 ragen durch L-förmige Führungsschlitze 16 und 17 hindurch, die in den beiden Wänden 8 vorgesehen sind. Mittels der Führungsstifte 14 und 15 und der Führungsschlitze 16 und 17 ist der Kassettenhalter 10 zwischen einer Ladeposition und einer Betriebsposition verstellbar gehalten. Die Ladeposition ist in den Figuren 1 und 2 mit vollen Linien dargestellt. In dieser Ladeposition ist eine Kassette 5 händisch in den Kassettenhalter 10 einführbar, und zwar in Richtung des Pfeiles 18. Aus dieser Ladeposition ist der Kassettenhalter 10 längs des durch die Führungsschlitze 16 und 17 festgelegten Verstellweges in eine in den Figuren 1 und 2 nicht dargestellte Betriebsposition verstellbar, in der die in den Kassettenhalter 10 eingeführte Kassette 5 eine Betriebslage im Gerät 1 einnimmt. In dieser Betriebslage der Kassette kann eine Aufzeichnung auf bzw. eine Wiedergabe von dem in der Kassette untergebrachten Magnetband erfolgen.

Um den Kassenhalter 10 zwischen seiner Ladeposition und seiner Betriebsposition zu verstellen, weist das Gerät 1 einen Motor 19 und ein von dem Motor 19 antreibbares vielstufiges Getriebe 20 auf. Dieses Getriebe 20 weist folgenden Aufbau auf. Auf der Motorwelle 21 sitzt ein Stirnzahnrad 22. Das Stirnzahnrad 22 kämmt mit einem weiteren Stirnzahnrad 23, das auf einer am Chassis 7 drehbar gelagerten Welle 24 drehfest sitzt und über diese Welle 24 mit einem auf der Welle 24 drehfest sitzenden Kegelzahnrad 25 drehfest verbunden ist. Das Kegelzahnrad 25 steht mit einem weiteren Kegelzahnrad 26 in Eingriff, das auf einer weiteren am Chassis 7 drehbar gelagerten Welle 27 sitzt. Über diese Welle 27 ist das weitere Kegelzahnrad 26 mit einem auf der Welle 27 sitzenden Stirnzahnrad 28 drehfest verbunden. Das Stirnzahnrad 28 steht mit einem weiteren Stirnzahnrad 29 in Eingriff. Das weitere Stirnzahnrad 29 sitzt auf einer am Chassis 7 drehbar gelagerten Welle 30 und ist über diene Welle 30 mit einem auf ihr sitzenden Stirnzahnrad 31 drehfest verbunden. Das Stirnzahnrad 31 kämmt mit einem weiteren Stirnzahnrad 32, das auf einem von der Wand 8 seitlich abstehenden, in der Wand 8 drehbar gelagerten Wellenstummel 33 drehfest sitzt. Auf dem Wellenstummel 33 sitzt weiters drehfest ein Stirnzahnrad 34, das mit einem Stirnzahnrad 35 kämmt. Das Stirnzahnrad 35 ist auf einem von der Wand 8 seitlich abstehenden, mit der Wand 8 drehfest verbundenen Wellenstummel 36 drehbar gelagert. Das Stirnzahrad 35 weist einen in radialer Richtung von demselben abstehenden Arm 37 auf. In dem Arm 37 ist ein Schlitz 38 vorgesehen, durch den der von dem Kassettenhalter 10 seitlich abstehende Führungsstift 14 hindurchragt. Auf diese Weise ist zwischen dem Motor 19 und dem Kassettenhalter 10 eine sowohl vom Motor 19 zum Kassenhalter 10 hin als auch vom Kassettenhalter 10 zum Motor 19 hin formschlüssige, praktisch schlupffreie Getriebeverbindung gebildet, über die der Kassettenhalter 10 von dem Motor 19 her antreibbar ist.

Der Kassettenhalter 10 weist einen mit seiner Bodenplatte 11 einstückig verbundenen, von derselben in der Einschubrichtung 18 abstehenden, L-förmig abgewinkelten Lappen 39 auf. Der Lappen 39 bildet einen Begrenzungsanschlag des Kassettenhalters 10, gegen den eine Kassette 5 beim händischen Einführen derselben in den Kassettenhalter 10 stößt. Über diesen Lappen 39 ist beim händischen Einführen der Kassette 5 in das Gerät 1 der Kassettenhalter 10 händisch von seiner in den Figuren 1 und 2 dargestellten Ladeposition in eine Schaltposition verstellbar. In den Figuren 1 und 2 ist von dem in seiner Schaltposition befindlichen Kassettenhalter 10 im wesentlichen nur der Lappen 39 mit punktierten Linien dargestellt.

Weiters weist das Gerät 1 eine von dem Kassettenhalter 10 her ansteuerbare Sensoreinrichtung 40 auf, die bei Erreichen der Schaltposition des Kassettenhalters 10 nach dessen händischer Verstellung aus seiner Ladeposition ein Steuersignal U1 zum Einschalten des Motors 19 erzeugt, wobei der Motor 19 aufgrund des Steuersignales U1 über das Getriebe 20 den Kassettenhalter 10 motorisch von seiner Schaltposition in seine Betriebsposition verstellt, wie dies nachfolgend anhand der Figuren 3 und 4 noch detailliert beschrieben ist.

Bei dem vorliegenden Gerät 1 weist die Sensoreinrichtung 40 einen Impulsgeber 41 auf, der einen von einem Getriebeteil des Getriebes 20, nämlich von der Welle 27, antreibbaren Impulsauslöser 42 aufweist. Der Impulsauslöser 42 ist hiebei als Flügelrad mit vier Flügeln ausgebildet. Das Flügelrad 42 wirkt mit einer schematisch dargestellten photoelektrischen Lichtschranke 43 zusammen. Der Impulsgeber 41, der im wesentlichen aus dem Flügelrad 42 und der Lichtschranke 43 besteht, ist auf diese Weise zur Erzeugung einer Vielzahl von Impulsen entsprechend der Bewegung, nämlich der Rotation, der Welle 27 ausgebildet.

Beim händischen Verstellen des Kassettenhalters 10 von seiner Ladeposition in seine Schaltposition wird vom Kassettenhalter 10 über den zwischen dem Kassettenhalter 10 und der Welle 27 liegenden Getriebeabschnitt, der wie erwähnt eine formschlüssige, schlupffreie Getriebeverbindung bildet, die Welle 27 und von dieser der Impulsauslöser 42 angetrieben. Hiedurch erzeugt der Impulsgeber 41 Impulse, wenn der Kassettenhalter 10 von seiner Ladeposition in seine Schaltposition verstellt wird. Die weitere Verarbeitung der mit dem Impulsgeber 41 erzeugten Impulse wird im folgenden anhand der in der Figur 3 dargestellten Schaltung und dem in der Figur 4 dargestellten Flußdiagramm beschrieben.

Vorerst wird nachfolgend die Schaltung gemäß Figur 3 in ihrem Aufbau beschrieben. Diese Schaltung enthält die Lichtschranke 43 des Impulsgebers 41, die an eine Spannung V1 angeschaltet ist. Das Ausgangssignal der Lichtschranke 43 wird einer Impulsformerstufe 44 zugeführt, in der das Ausgangssignal der Lichtschranke 43 verstärkt und in ein rechteckförmiges Impulssignal umgeformt wird. Der Ausgang der Impulsformerstufe 44 ist mit einem Eingang E1 eines Mikrocomputers 45 verbunden. Der Mikrocomputer 45, der selbstverständlich zur Realisierung einer Vielzahl von Aufgaben im Gerät ausgenützt wird, bildet auch einen Teil der bereits erwähnten Sensoreinrichtung 40, die bei Erreichen der Schaltposition des Kassettenhalters 10 ein Steuersignal U1 zum Einschalten des Motors 19 erzeugt. Der mit dem Mikrocomputer 45 gebildete Teil der Sensoreinrichtung 40 ist in Figur 3 schematisch blockschaltbildmäßig dargestellt. Dieser Teil der Sensoreinrichtung 40 könnte aber auch in diskreter Schaltungstechnik ausgebildet werden.

Die Sensoreinrichtung 40 weist einen mit dem Eingang E1 zusammenwirkenden Zähler 46 auf, der die Anzahl der mit dem Impulsgeber 41 der Sensoreinrichtung 40 erzeugten Impulse zählt. Der Zähler 46 bildet dabei zugleich einen Speicher, in dem der jeweilige Zählerstand über an sich beliebig lange Zeit gespeichert bleibt. Mit dem Zähler 46 wirkt ein Komparator 47 zusammen, der die Anzahl der mit dem Impulsgeber 41 erzeugten und mit dem Zähler 46 gezählten Impulse gemäß einer vorgegebenen Vergleichsbedingung mit einem Sollwert vergleicht und bei Erfüllung der Vergleichsbedingung das Steuersignal U1 zum Einschalten des Motors 19 erzeugt. Der erwähnte Sollwert ist in einem Speicher 48 gespeichert, der ebenfalls mit dem Komparator 47 zusammenwirkt. Die Vergleichsbedingung ist so festgelegt, daß die Anzahl der mit dem Zähler 46 gezählten Impulse mit dem im Speicher 48 gespeicherten Sollwert übereinstimmen muß. Die Vergleichsbedingung könnte aber auch so festgelegt sein, daß die Anzahl der gezählten Impulse in einem zwischen zwei Grenzwerten liegenden Sollwertbereich liegen muß. Wenn die Vergleichsbedingung erfüllt ist, wird das Steuersignal U1 von dem Komparator 47 erzeugt. Das Steuersignal U1 steht darin an einem Ausgang A1 des Mikrocomputers 45 zur Verfügung. Das Steuersignal U1 wird einer Verstärkerstufe 49 zugeführt. Die Verstärkerstufe 49 steuert eine schematisch dargestellte elektronische Schaltstufe 50. Bei Auftreten des Steuersignales U1 werden die Schalter der Schaltstufe 50 geschlossen, wodurch der Motor 19 in der Weise an zwei Spannungen V2 und V3 angeschaltet wird, daß der Motor 19 in einer solchen Drehrichtung angetrieben wird, daß von dem Motor 19 über das Getriebe 20 der Kassettenhalter 10 von seiner Schaltposition in seine Betriebsposition verstellt wird.

Die Sensoreinrichtung 40 weist weiters einen Detektor 51 auf, der mit dem Impulsformer 44 über den Eingang E1 des Mikrocomputers 45, mit dem Komporator 47 und mit einem weiteren Speicher 52 zusammenwirkt. Mit dem Detektor 51 ist detektierbar, daß die Vergleichsbedingung für die Anzahl der mit dem Impulsgeber 41 erzeugten und mit dem Zähler 46 gezählten Impulse mit dem Sollwert innerhalb einer vorgegebenen Zeitspanne nach dem Auftreten des ersten erzeugten Impulses erfüllt ist. Hiefür wird dem Detektor 51 vom Impulsformer 44 her zumindest der erste erzeugte Impuls, vom Komparator 47 her das Steuersignal U1 und vom Speicher 52 her ein weiterer Sollwert zugeleitet. Dieser weitere Sollwert entspricht der vorerwähnten Zeitspanne, innerhalb der die Vergleichsbedingung erfüllt sein soll. Bei Nichterfüllung der Vergleichsbedingung innerhalb dieser vorgegebenen Zeitspanne - was dann der Fall ist, wenn der Einführvorgang einer Kassette 5 in das Gerät 1 in einer vor der Schaltposition befindlichen Zwischenposition des Kassettenhalters 10 abgebrochen oder für längere Zeit unterbrochen wird - wird von dem Detektor 51 der Sensoreinrichtung 40 ein weiteres Steuersignal U2 zum Einschalten des Motors 19 erzeugt, wobei der Motor aufgrund des weiteren Steuersignales U2 über das Getriebe 20 den Kassettenhalter 10 motorisch von seiner Zwischenposition in seine Ladeposition zurückverstellt. Solange sich der Kassettenhalter 10 in seiner Zwischenposition befindet, in die er bis zum Zeitpunkt des Wegfalles der beim händischen Einführen auf die Kassette 5 ausgeübten Verstellkraft verstellt wurde, wird der Kassettenhalter 10 von dem Getriebe 20 in dieser Zwischenposition gehalten. Das weitere Steuersignal U2 steht an einem mit dem Detektor 51 zusammenwirkenden Ausgang A2 des Mikrocomputers 45 zur Verfügung. Das weitere Steuersignal U2 wird einer Verstärkerstufe 53 zugeführt. Die Verstärkerstufe 53 steuert eine weitere elektronische Schaltstufe 54. Bei Auftreten des weiteren Steuersignales U2 werden die Schalter der Schaltstufe 54 geschlossen, wodurch der Motor 19 in der Weise an die beiden Spannungen V2 und V3 angeschaltet wird, daß der Motor 19 in einer solchen Drehrichtung angetrieben wird, daß von dem Motor 19 über das Getriebe 20 der Kassettenhalter 10 in Richtung von seiner Betriebsposition in seine Ladeposition verstellt wird.

Die Schaltung gemäß Figur 3 enthält auch noch drei schematisch dargestellte Schalter S1, S2 und S3. Es kann sich bei diesen Schaltern um beliebig ausgebildete, auch photoelektrisch wirksame Schalter handeln. Alle drei Schalter sind einerseits un eine Spannung V4 angeschaltet. Der Schalter S1 ist mit einem Eingang E4, der Schalter S2 mit einem Eingang E3 und der Schalter S3 ist mit einem Eingang E2 des Mikrocomputers 45 verbunden. Der Schalter S1 wird dann geschlossen, wenn der Kassettenhalter 10 seine Betriebsposition erreicht. Der Schalter S2 wird dann geschlossen, wenn der Kassettenhalter 10 seine Ladeposition erreicht. Der Schalter S3 wird dann geschlossen, wenn eine händisch betätigbare Taste 55 betätigt wird. Die Taste 55 ist eine sogenannte Ejcet-Taste, die betätigt wird, um eine Verstellung des Kassettenhalters 10 von seiner Betriebsposition in seine Ladeposition zu erreichen, um eine Kassette 5 aus dem Gerät 1 entnehmen zu können. Mit den Eingängen E2, E3 und E4 wirkt je eine Detektorstufe 56, 57 bzw. 58 zusammen. Mit jeder Detektorstufe 56, 57 bzw. 58 ist detektierbar, daß der betreffende Schalter S3, S2 bzw. S1 geschlossen wurde bzw. geschlossen ist. Wenn die Detektorstufe 56 detektiert, daß der Schalter S3 geschlossen ist, gibt sie ein weiteres Steuersignal U3 ab, das über den Ausgang A2 des Mikrocomputers 45 der Verstärkerstufe 53 zugeführt wird und dieselbe Wirkung hat wie das weitere Steuersignal U2, das der Detektor 51 abgibt. Wenn die Detektorstufe 57 detektiert, daß der Schalter S2 geschlossen ist, gibt sie ein weiteres Steuersignal U4 ab, das über einen weiteren Ausgang A3 des Mikrocomputers 45 einer weiteren Verstärkerstufe 59 zugeführt wird. Die Verstärkerstufe 59 steuert die Schaltstufe 54. Bei Auftreten des weiteren Steuersignales U4 werden die Schalter der Schaltstufe 54 geöffnet und folglich die Spannungsversorgung des Motors 19 unterbrochen. Wenn die Detektorstufe 58 detektiert, daß der Schalter S1 geschlossen ist, gibt sie ein weiteres Steuersignal U5 ab, das über einen weiteren Ausgang A4 des Mikrocomputers 45 einer weiteren Verstärkerstufe 60 zugeführt wird. Die Verstärkerstufe 60 steuert die Schaltstufe 50. Bei Auftreten des weiteren Steuersignals U5 werden die Schalter der Schaltstufe 50 geöffnet und folglich die Spannungsversorgung des Motors 19 unterbrochen.

Im folgenden wird anhand des in Figur 4 dargestellten Flußdiagrammes ein Programmablauf beschrieben, der im Mikrocomputer 45 des Gerätes 1 abgearbeitet wird, um den Kassettenhalter 10 einerseits nach dem händischen Einführen einer Kassette 5 in denselben in seine Betriebsposition und andererseits aus seiner Betriebsposition in seine Ladeposition zurückzuverstellen.

Um den Kassettenhalter 10 nach einem händischen Einführen einer Kassette 5 in den Kassettenhalter in seine Betriebsposition zu verstellen, wird der Programmablauf beim Block 61 gestartet. Beim nachfolgenden Block 62 wird der Zählerstand Z1 des Zählers 46, der die vom Impulsgeber 41 erzeugten Impulse zählt, auf den Wert Null gesetzt. Danach wird beim Block 63 der Ausgang A1 des Mikrocomputers 45 auf ein niedriges Potential L (Low) gesetzt. Danach wird beim Block 64 der Ausgang A2 auf ein niedriges Potential L gesetzt. Danach wird beim Block 65 der Ausgang A3 auf ein niedriges Potential L gesetzt. Danach wird beim Block 66 der Ausgang A4 auf ein niedriges Potential L gesetzt. Durch das Abarbeiten der Blöcke 63, 64, 65 und 66 ist gewährleistet, daß sämtliche Schalter der beiden Schaltstufen 50 und 54 geöffnet sind und daher der Motor 19 stillsteht.

Beim nachfolgenden Block 67 wird mit dem Detektor 51 geprüft, ob ein Impuls am Eingang E1 des Mikrocomputers 45 auftritt, ob also vom Impulsgeber 41 ein erster Impuls erzeugt wurde. Solange dies nicht der Fall ist, wird der Programmablauf beim Block 63 fortgesetzt, wonach dann wieder die Blöcke 64, 65, 66 und 67 durchlaufen werden. Wenn beim Block 67 das Auftreten des ersten Impulses am Eingang E1 festgestellt wird, dann wird nachfolgend beim Block 68 der Zählerstand Z2 eines internen Zählers Z des Mikrocomputers 45, welcher interne Zähler Z Teil des Detektors 51 ist, auf den Wert Null gesetzt und für einen Zählvorgang gestartet. Ein solcher interner Zähler Z hat bekanntlich die Eigenschaft, daß er unabhängig von weiteren Programmabläufen im Mikrocomputer nach seinem Starten laufend inkrementiert bzw. dekrementiert wird.

Beim nachfolgenden Block 69 wird, nachdem zuvor beim Block 67 das Auftreten des ersten Impulses des Impulsgebers 41 festgestellt wurde, der Zählerstand Z1 des Zählers 46 inkrementiert, also um den Wert 1 erhöht. Danach wird beim Block 70 geprüft, ob am Eingang E1 ein weiterer Impuls des Impulsgebers 41 auftritt. Wenn dies der Fall ist, wird nachfolgend beim Block 71 der Zählerstand Z1 des Zählers 46 inkrementiert. Danach wird beim Block 72 mit dem Komparator 47 geprüft, ob der Zählerstand Z1 des Zählers 46 einem im Speicher 48 gespeicherten Sollwert N1 entspricht. Wenn diese vorgegebene Vergleichsbedingung nicht erfüllt ist, wird der Programmablauf beim Block 70 fortgesetzt, wonach dann wieder die Blöcke 71 und 72 durchlaufen werden. Sobald der Zählerstand Z1 des Zählers 46 mit dem Sollwert N1 übereinstimmt, also der Impulsgeber 41 eine vorgegebene Anzahl von Impulsen abgegeben hat - was bedeutet, daß beim händischen Einführen einer Kassette 5 in den Kassettenhalter 10 letzterer über seinen Lappen 39 von Hand aus bis in seine Schaltposition verstellt wurde - gibt der Komparator 47 beim nachfolgenden Block 73 das Steuersignal U1 ab, indem der Ausgang A1 des Mikrocomputers 45 auf ein hohes Potential H (High) geschaltet wird. Dadurch werden die Schalter der Schaltstufe 50 geschlossen und der Motor 19 angetrieben, wobei der Motor 19 über das Getriebe 20 den Kassettenhalter 10 aus seiner Schaltposition motorisch in seine Betriebsposition verstellt. Beim nachfolgenden Block 74 wird mit der Detektorstufe 58 geprüft, ob der Schalter S1 geschlossen ist. Wenn dies nicht der Fall ist, wird der Programmablauf beim Block 74 fortgesetzt. Sobald der Schalter S1 geschlossen ist, was bedeutet, daß der Kassettenhalter 10 seine Betriebsposition erreicht hat, wird der Programmablauf beim Block 75 fortgesetzt. Beim Block 75 gibt die Detektorstufe 58 am Ausgang A4 des Mikrocomputers 45 das weitere Steuersignal U5 ab, indem der Ausgang A4 auf ein hohes Potential H gesetzt wird. Dadurch werden die Schalter der Schaltstufe 50 geöffnet und der Motor 19 abgeschaltet. Damit ist der Kassettenhalter 10 in seine Betriebsposition verstellt. Danach wird der Programmablauf beim Block 76 beendet.

Wenn der Benützer des Gerätes 1 den Einführvorgang einer Kassette 5 in den Kassettenhalter 10 noch vor dem Errreichen der Schaltposition des Kassettenhalters unterbricht bzw. abbricht, wird der Kassettenhalter 10, wie dies vorstehend bereits erwähnt wurde, von dem Getriebe 20 in seiner jeweiligen Zwischenposition zwischen der Ladeposition und der Schaltposition, die der Kassettenhalter zum Zeitpunkt des Unterbrechens bzw. Abbrechens des Einführvorganges einnimmt, festgehalten. In diesem Fall wird dann, da die beim Block 72 überprüfte Vergleichsbedingung noch nicht erfüllt ist, beim nachfolgenden Abarbeiten des Blockes 70 festgestellt, daß kein weiterer Impuls des Impulsgebers 41 auftritt. Daher wird dann der Programmablauf beim Block 77 fortgesetzt. Beim Block 77 wird mit dem Detektor 51 geprüft, ob der Zählerstand Z2 des internen Zählers Z, dessen Zählerstand Z2 beim Block 68 auf den Wert Null gesetzt und der beim Block 68 gestartet wurde, bereits einem im Speicher 52 gespeicherten Sollwert N2 entspricht. Dieser Sollwert N2 ist beispielsweise so groß gewählt, daß die Zeitspanne, die der interne Zähler Z bei seinem automatischen Inkrementieren bzw. Dekrementieren benötigt, bis sein Zählerstand Z2 den Sollwert N2 erreicht hat, fünf Sekunden entspricht. Wenn der Zählerstand Z2 des internen Zählers Z den Sollwert N2 nicht erreicht hat, wird der Programmablauf nachfolgend beim Block 70 fortgesetzt. Tritt danach wieder ein Impuls des Impulsgebers 41 auf, wenn also der Benützer des Gerätes die Kassette nunmehr wieder weiter in das Gerät einführt und dabei den Kassettenhalter händisch verstellt, wird dies beim Block 70 festgestellt und folglich der Programmablauf beim Block 71 fortgesetzt, wobei dann der Zähler 46 den Zählvorgang für die vom Impulsgeber 41 abgegebenen Impulse bei dem im Zähler 46, der zugleich als Speicher dient, gespeicherten Zählerstand Z1 fortsetzt. Wenn aber kein weiterer Impuls des Impulsgebers 41 auftritt, was beim Block 70 festgestellt wird, und danach dann beim Block 77 festgestellt wird, daß der Zählerstand 22 des internen Zählers Z den Sollwert N2 erreicht hat, dann wird der Programmablauf beim Block 78 fortgesetzt. Beim Block 78 gibt der Detektor 51 das weitere Steuersignal U2 ab, indem der Ausgang A2 des Mikrocomputers 45 auf ein hohes Potential H gesetzt wird. Dadurch werden dann die Schalter der Schaltstufe 54 geschlossen, wodurch der Motor 19 in der Weise angetrieben wird, daß über das Getriebe 20 der Kassettenhalter 10 motorisch von seiner Zwischenposition in seine Ladeposition zurückverstellt wird. Beim nachfolgenden Block 79 wird mit der Detektorstufe 57 geprüft, ob der Schalter S2 geschlossen ist. Solange dies nicht der Fall ist, wird der Programmablauf beim Block 79 fortgesetzt. Wenn jedoch beim Block 79 mit der Detektorstufe 57 festgestellt wird, daß der Schalter S2 geschlossen ist, was bedeutet, daß der Kassettenhalter 10 seine Ladeposition erreicht hat, dann wird der Programmablauf beim Block 80 fortgesetzt. Beim Block 80 gibt die Detektorstufe 57 das weitere Steuersignal U4 ab, indem der Ausgang A3 des Mikrocomputers 45 auf ein hohes Potential H gesetzt wird. Dadurch werden die Schalter der Schaltstufe 54 geöffnet, wodurch der Motor 19 stillgesetzt wird. Damit ist der Kassettenhalter 10 wieder in seine Ladeposition zurückverstellt. Nach dem Block 80 wird der Programmablauf beim Block 63 fortgesetzt, wonach wieder die Blöcke 64, 65, 66 und 67 durchlaufen werden. Beim Block 67 wird das Auftreten eines ersten Impulses des Impulsgebers 41 überwacht, es wird somit auf das neuerliche Einführen einer Kassette in den Kassettenhalter bzw. in das Gerät gewartet.

Um den Kassettenhalter 10 nach einem erfolgten Aufzeichnungs- bzw. Wiedergabevorgang aus seiner Betriebsposition wieder in seine Ladeposition zu verstellen, um die Kassette wieder aus dem Gerät entnehmen zu können, wird der Programmablauf gemäß Figur 4 beim Block 81 gestartet. Danach wird beim Block 82 der Ausgang A1 des Mikrocomputers 45 auf ein niedriges Potential L gesetzt. Danach wird beim Block 83 der Ausgang A2 auf ein niedriges Potential gesetzt. Danach wird beim Block 84 der Ausgang A3 auf ein niedriges Potential L gesetzt. Danach wird beim Block 85 der Ausgang A4 auf ein niedriges Potential L gesetzt. Beim nachfolgenden Block 86 wird mit der Detektorstufe 56 geprüft, ob der Schalter S3 geschlossen ist, ob also die Eject-Taste 55 betätigt wurde. Wenn dies nicht der Fall ist, wird der Programmablauf beim Block 82 fortgesetzt und danach werden die Blöcke 83, 84, 85 und 86 abgearbeitet. Wenn beim Block 86 mit der Detektorstufe 56 festgestellt wird, daß der Schalter S3 geschlossen ist, also die Eject-Taste 55 betätigt wurde, wird der Programmablauf beim Block 78 fortgesetzt. Beim Block 78 wird bekanntlich der Ausgang A2 des Mikrocomputers 45 auf ein hohes Potential H gesetzt, wodurch der Motor 19 angetrieben wird und von dem Motor 19 über das Getriebe 20 der Kassettenhalter 10 von seiner Betriebsposition in seine Ladeposition verstellt wird. Danach werden wieder die Blöcke 79 und 80 abgearbeitet, wobei durch das Abarbeiten des Blockes 80 der Motor 19 nach der Verstellung des Kassettenhalters 10 in seine Ladeposition wieder abgeschaltet wird.

Bei dem vorstehend beschriebenen Gerät ist ein ohnehin vorhandener Getriebeteil mit einem Impulsauslöser eines Impulsgebers verbunden. Beim Einführen einer Kassette in den Kassettenhalter wird der Impulsauslöser angetrieben, wobei mit dem Impulsgeber Impulse erzeugt werden, die mit einem Zähler gezählt werden. Wenn der Zählerstand des Zählers mit einem Sollwert übereinstimmt, wird ein Steuersignal erzeugt, aufgrund dessen der Motor den Kassettenhalter in seine Betriebsposition verstellt. Da das Erzeugen des Steuersignals nur von der Anzahl der mit dem Impulsgeber erzeugten Impulse abhängig ist, ist die genaue Position des Impulsgebers unerheblich, was hinsichtlich einer unkritischen Montage und Positionierung des Impulsgebers vorteilhaft ist. Der Zeitpunkt des Auftretens des Steuersignales hängt von der Wahl der Größe des Sollwertes ab. Somit ist es einfach möglich durch entsprechende Wahl des Sollwertes den Zeitpunkt des Auftretens des Steuersignales zu verändern, ohne bauliche Veränderungen im Gerät vornehmen zu müssen.

**Patentansprüche**

1. Aufzeichnungs- und/oder Wiedergabegerät, in das eine einen Aufzeichnungsträger enthaltende Kassette einsetzbar ist, mit einem Motor, mit einem von dem Motor antreibbaren Getriebe, mit einem Kassettenhalter, der von dem Motor über das Getriebe antreibbar ist und der zwischen einer Ladeposition, in der die Kassette händisch in den Kassettenhalter einführbar ist, und einer Betriebsposition, in der die in den Kassettenhalter eingeführte Kassette eine Betriebslage im Gerät einnimmt, verstellbar gehalten ist und der mindestens einen Begrenzungsanschlag aufweist, gegen den die Kassette beim händischen Einführen in den Kassettenhalter stößt und über den beim händischen Einführen der Kassette der Kassettenhalter händisch von seiner Ladeposition in eine Schaltposition verstellbar ist, und mit einer von dem Kassettenhalter her ansteuerbaren Sensoreinrichtung, die bei Erreichen der Schaltposition des Kassettenhalters nach dessen händischer Verstellung aus seiner Ladeposition ein Steuersignal zum Einschalten des Motors erzeugt, wobei der Motor aufgrund des Steuersignales über das Getriebe den Kassettenhalter motorisch von seiner Schaltposition in seine Betriebsposition verstellt, dadurch gekennzeichnet, daß die Sensoreinrichtung einen Impulsgeber aufweist, der einen von einem Getriebeteil des Getriebes antreibbaren Impulsauslöser aufweist und der zur Erzeugung einer Vielzahl von Impulsen entsprechend der Bewegung des Getriebeteiles ausgebildet ist, daß von dem Getriebe zumindest der zwischen dem Kassettenhalter und dem Getriebeteil liegende Getriebeabschnitt zumindest in Richtung vom Kassettenhalter zum Getriebeteil formschlüssig ausgebildet ist, daß beim händischen Verstellen des Kassettenhalters von seiner Ladeposition in seine Schaltposition vom Kassettenhalter über den Getriebeabschnitt der Getriebeteil und von diesem der Impulsauslöser angetrieben wird und dabei der Impulsgeber Impulse erzeugt, und daß die Sensoreinrichtung einen Zähler, der die Anzahl der mit dem Impulsgeber erzeugten Impulse zählt, und einen mit dem Zähler zusammenwirkenden Komparator aufweist, der die Anzahl der mit dem Impulsgeber erzeugten und mit dem Zähler gezählten Impulse gemäß einer vorgegebenen Vergleichsbedingung mit einem Sollwert vergleicht und bei Erfüllung der Vergleichsbedingung das Steuersignal zum Einschalten des Motors erzeugt.

2. Gerät nach Anspruch 1, dadurch gekennzeichnet, daß das Getriebe zum Festhalten des Kassettenhalters in einer jeweils zum Zeitpunkt eines Wegfalles der beim händischen Einführen auf die Kassette ausgeübten Verstellkraft eingenommenen Zwischenposition zwischen der Ladeposition und der Schaltposition ausgebildet ist.

3. Gerät nach Anspruch 2, dadurch gekennzeichnet, daß die Sensoreinrichtung einen Speicher aufweist, mit dem die bis zum Erreichen der Zwischenposition mit dem Impulsgeber erzeugte und mit dem Zähler gezählte Anzahl von Impulsen gespeichert wird.

4. Gerät nach Anspruch 2 oder 3, dadurch gekennzeichnet, daß die Sensoreinrichtung einen Detektor aufweist, mit dem detektierbar ist, daß die Vergleichsbedingung für die Anzahl der mit dem Impulsgeber erzeugten und mit dem Zähler gezählten Impulse mit dem Sollwert innerhalb einer vorgegebenen Zeitspanne nach dem Auftreten des ersten erzeugten Impulses erfüllt ist, und der bei Nichterfüllung der Vergleichsbedingung innerhalb dieser Zeitspanne ein weiteres Steuersignal zum Einschalten des Motors erzeugt, wobei der Motor aufgrund des weiteren Steuersignales über das Getriebe den Kassettenhalter motorisch von seiner Zwischenposition in seine Ladeposition zurückverstellt.

FIG.1

FIG.2

FIG.3

FIG.4

| | **EINSCHLÄGIGE DOKUMENTE** | | EP 91202282.9 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
| Y | DE - A - 3 737 286 (TANDBERG DATA) * Spalte 4, Zeilen 31-39; Ansprüche 1-3,5-8 * -- | 1-4 | G 11 B 15/675 |
| Y | US - A - 4 561 031 (TANABE) * Zusammenfassung; Fig. 1,2, 11; Spalte 1, Zeilen 30-54; Ansprüche 1,3 * -- | 1-4 | |
| P,A | US - A - 4 972 278 (HARA) * Fig. 5A,30; Spalte 9, Zeilen 20-34; Spalte 23, Zeilen 3-25 * -- | 1 | |
| A | US - A - 4 654 731 (FRÖSCHL) * Zusammenfassung; Fig. 1; Spalte 8, Zeilen 33-55 * ---- | 1 | RECHERCHIERTE SACHGEBIETE (Int. Cl⁵) G 11 B 15/00 G 11 B 25/00 G 11 B 5/00 |

Der vorliegende Recherchenbericht wurde für alle Patentansprüche erstellt.

| Recherchenort | Abschlußdatum der Recherche | Prüfer |
|---|---|---|
| WIEN | 09-12-1991 | DIMITROW |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82